# EUROPÄISCHE PATENTSCHRIFT

(11) **EP 2 052 884 B1**
(45) Veröffentlichungstag und Bekanntmachung des Hinweises auf die Patenterteilung: **11.10.2017**
(21) Anmeldenummer: 08018572.1
(22) Anmeldetag: 23.10.2008
(51) Int. Cl.: B60G 17/016, B60G 17/0165, B60G 17/018, B60G 17/06, B60W 40/06, B60W 40/10, B60W 10/22

(54) **Verfahren und System zur Beeinflussung der Bewegung eines in seinen Bewegungsabläufen steuerbaren oder regelbaren Fahrzeugaufbaus eines Kraftfahrzeuges und Fahrzeug**
Method and system for affecting the movement of a vehicle structure on a powered vehicle and vehicle controlled or regulated by its movement processes
Procédé et système destinés à influencer le mouvement d'une caisse d'un véhicule automobile ou d'un véhicule, pouvant être commandée ou réglée dans ses déroulements de mouvements

(30) Priorität: 26.10.2007 DE 102007051209
(43) Veröffentlichungstag der Anmeldung: 29.04.2009
(73) Patentinhaber: Volkswagen Aktiengesellschaft, 38440 Wolfsburg (DE)
(72) Erfinder: Arenz, Andrea, 38458 Velpke (DE)

(56) Entgegenhaltungen:
- EP-A2- 1 518 722
- WO-A1-2006/126342
- DE-A1- 10 338 994
- DE-A1-102005 048 718
- DE-B4- 10 135 020
- JP-A- 09 011 723
- JP-A- 2006 069 527

## Beschreibung

Die Erfindung betrifft ein Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden, der Dämpferregler wenigstens ein Steuersignal zur Ansteuerung von Aktuatoren, insbesondere von semiaktiven oder aktiven Dämpfern, liefert, mittels denen die Bewegung des Fahrzeugaufbaus beeinflusst werden kann. Die Erfindung betrifft ferner ein System zur Durchführung des Verfahrens und ein Fahrzeug, insbesondere Kraftfahrzeug, mit einem System zur Beeinflussung der Bewegung eines in seinen Bewegungsabläufen steuerbaren oder regelbaren Fahrzeugaufbaus.

Verfahren und Systeme der gattungsgemäßen Art sind bekannt. So ist beispielsweise aus DE 39 18 735 A1 ein Verfahren und eine Vorrichtung zur Dämpfung von Bewegungsabläufen an Fahrwerken von Personen- und Nutzkraftfahrzeugen bekannt, bei denen aus einer sensorisch ermittelten Bewegung zweier Fahrzeugmassen mittels einer Signalverarbeitungsschaltung ein Steuersignal für einen steuerbaren, an den Fahrzeugmassen angreifenden Aktuator gebildet wird. Für eine komfortable und dennoch sichere Fahrwerkabstimmung ist vorgesehen, die sensorisch ermittelten Signale über eine der Signalverarbeitungsschaltung angehörenden Schaltungsanordnung mit frequenzabhängigem Übertragungsverhalten zu leiten. Hierdurch soll erreicht werden, dass aufgrund der frequenzabhängigen Verarbeitung der Sensorsignale keine statische Kennlinie für die Aktuatorsteuerung beziehungsweise Aktuatorregelung eingesetzt wird, sondern eine von dem Frequenzinhalt des Bewegungsablaufs abhängige Aktuatorsteuerung beziehungsweise Aktuatorregelung erfolgt. Hierdurch soll das Ziel eines möglichst hohen Fahrkomforts bei einer auch in Grenzbereichen des Fahrzustandes sicheren Auslegung des Fahrwerks erzielt werden. Diesem Ansatz liegt der Gedanke zugrunde, dass dem Zielkonflikt zwischen gewünschtem Fahrkomfort, das heißt komfortable und weiche Auslegung, und Fahrdynamik, das heißt sportliche und straffe Abstimmung, einerseits und einer ausreichenden Fahrsicherheit andererseits entsprochen werden soll. Für Fahrkomfort und Fahrdynamik ist eine Dämpfung der Bewegung des Aufbaus entscheidend, während für eine Fahrsicherheit eine Radlast beziehungsweise Radlastschwankung entscheidend ist.

Da Kraftfahrzeuge nicht an eine Spur gebunden sind, müssen sie von dem Fahrer auf dem von ihm bestimmten Soll-Kurs gehalten werden. Es sollen daher auf das Fahrzeug einwirkende Störungen, wie zum Beispiel Windkräfte, keine oder nur möglichst geringe Kursabweichungen verursachen. Es wird somit eine hohe Eigenstabilität des als Regelstrecke auffassbaren Fahrzeugs verlangt. Weiterhin sollen die erreichbaren Kurvengeschwindigkeiten und Querbeschleunigungen im Hinblick auf die Fahrsicherheit und Fahrleistung hoch sein. Das heißt, es ist eine hohe Stabilitätsreserve der Regelstrecke Fahrzeug erwünscht. Betrachtet man den Fahrer als Regler eines Regelkreises und das Fahrzeug als Regelstrecke, so ist die Stellgröße bei Betrachtung der Fahrzeug-Querdynamik insbesondere der Lenkwinkel und die Regelabweichung wird vom Fahrer als Differenz zwischen Soll-Kurs und Ist-Kurs wahrgenommen. Mit anderen Worten, das Fahrzeug soll ein gutes Eigenlenkverhalten besitzen.

Unter dem Eigenlenkverhalten eines Fahrzeugs versteht man Kursänderungen ohne einen Eingriff des Fahrers, zum Beispiel durch Seitenwind oder Fliehkräfte während der Kurvenfahrt. Vergrößert sich durch das Eigenlenkverhalten der gefahrene Kurvenradius, so spricht man vom Untersteuern, beim Verringern des Kurvenradius vom Übersteuern. Falls das Eigenlenkverhalten keine Kursänderung bewirkt, so verhält sich das Fahrzeug neutral.

Querdynamische Bewegungsänderungen wirken sich zum einen komfortseitig dadurch aus, dass Wankbewegungen auftreten können. Zum anderen besteht in der Regel die Forderung, dass bei diesen fahrdynamischen Vorgängen eine möglichst geringe optimierte Radlastverteilung mit geringer Radlastschwankung auftritt und so ein optimaler Kontakt der Reifen eines Fahrzeugs mit der Straße gegeben ist. Dies vermittelt nicht nur dem Fahrer ein gutes Fahrdynamikverhalten des Fahrzeugs, sondern es können Kräfte auch besser übertragen werden. Dies ist insbesondere wichtig bei fahrsicherheitskritischen Manövern, wie einem heftigen Ausweichmanöver. Zielsetzung sollte sein, dass sich ein möglichst harmonischer Bewegungsablauf ergibt, der ein subjektiv möglichst sicheres Fahrgefühl vermittelt.

Hierzu sind aus dem Stand der Technik praktische Regelungssysteme zur Regelung der Querbeschleunigung und Modelle zur Bestimmung der Querbeschleunigung bekannt.

Bei ESP (elektronisches Stabilitätsprogramm) handelt es sich um ein Fahrerassistenzsystem zur Erhöhung der Sicherheit eines Pkws. Durch gezieltes Bremsen einzelner Räder versucht das System, ein Schleudern des Fahrzeugs im Grenzbereich zu verhindern und dem Fahrer so die Kontrolle über das Fahrzeug zu sichern. ESP verhindert durch gezieltes automatisches Abbremsen einzelner Räder sowohl das Übersteuern als auch das Untersteuern eines Fahrzeugs.

Damit das ESP auf kritische Fahrsituationen reagieren kann, vergleicht das System permanent den Fahrerwunsch mit dem Fahrzustand. Der Lenkwinkelsensor liefert den Fahrerwunsch hinsichtlich der Fahrtrichtung. Motormanagement, die ABS-Drehzahlsensoren (ABS = Antiblockiersystem) und der Gierratensensor (Gierrate, Querbeschleunigung) liefern die Signale zur Interpretation des Fahrzeugverhaltens. Wenn eine wesentliche Abweichung des berechneten Fahrzustandes vom Fahrerwunsch festgestellt wird, greift das System ein. Ein Übersteuern wird durch Abbremsen des kurvenäußeren Vorderrades, ein Untersteuern hingegen durch Abbremsung des kurveninneren Hinterrades korrigiert. Somit wird direkt das Eigenlenkverhalten des Fahrzeugs beeinflusst.

Für das ESP wird meist ein Sensorcluster verwendet, wobei der Gierratensensor die Drehung um die Hochachse misst und der Querbeschleunigungssensor die Beschleunigung entlang der y-Achse.

Bekannt ist ferner das Einspurmodell. Es handelt sich dabei um ein vereinfachtes Modell zur Beschreibung des Lenkverhaltens und beschreibt die Reaktionen von Fahrzeugen auf Lenkbewegungen. Dabei werden folgende Annahmen getroffen: die Fahrgeschwindigkeit wird als konstant angenommen (keine Beschleunigung in Fahrzeuglängsrichtung). Es gibt zwei Freiheitsgrade, die Gierbewegung und die Schwimmbewegung. Es findet nur eine geringe Wankbewegung statt, das heißt. Es gibt keine gravierende Radlastdifferenz zwischen kurveninnerem und kurvenäußerem Rad einer Achse. Es finden nur minimale Hub- und Nickbewegung statt; somit liegen konstante Radlasten an Vorder- und Hinterachse an. Die Radaufstandspunkte, an denen die zur Kurshaltung erforderlichen Seitenkräfte der Reifen angreifen, werden achsweise in der Fahrzeugmitte zusammengefasst. Es gibt nur kleine Lenk- und Schräglaufwinkel sowie linearisierte Seitenkraftkennlinien an den Reifen. Die Reifennachläufe und Rückstellmomente infolge der Schräglaufwinkel werden vernachlässigt. Es gibt keine Umfangskräfte an den Reifen. Die Bedingung v = const erfordert Längskräfte, die jedoch bei kleinen Lenkwinkeln vernachlässigt werden können. Die Gültigkeit der Einspurmodelle gilt nur für trockene Fahrbahnen und wirkende Querbeschleunigungen unter 0,5g ≈ 5 m/s². Etwa bis zu dieser Grenze kann das Verhältnis zwischen Reifenseitenkraft und -schräglauf als linear betrachtet werden.

Es ist ferner möglich, vereinfachte Strukturen dieses Einspurmodells zu verwenden. Zum Beispiel solche, die keinen Schwimmwinkel berücksichtigen.

Trotz all dieser Einschränkungen weisen selbst die einfachen Modelle meist eine sehr gute Übereinstimmung mit gemessenen Größen auf, so lange die Fahrzeugbewegung augrund eines Lenkwinkels erfolgt und sich das Fahrzeug nicht eigenständig bewegt.

Diese Modelle finden auch in Steuergeräten Verwendung. Bei der ESP-Regelung wird beispielsweise aus dem Einspurmodell eine Gierrate ermittelt und diese mit der gemessenen Gierrate verglichen, um so ein Unter- oder Übersteuern des Fahrzeugs festzustellen. Hierbei wird die berechnete Gierrate zeitlich über Verzögerung an die gemessene Gierrate angepasst.

Stand der Technik für Dämpferregelungssysteme ist es, einzelne Größen wie beispielsweise die Querbeschleunigung oder deren Ableitung für eine Querdynamikregelung zu verwenden. Eine derart geringe Anzahl von Eingangsgrößen gibt in der Regel nicht hinreichend Aufschluss über den aktuellen Vorgang der Querbeschleunigung. Werden aber mehr Eingangsgrößen zur Bestimmung der aktuellen Querbeschleunigung eingesetzt, so werden bei den bekannten Regelungsverfahren auch entsprechend mehr Regelkreise benötigt, die aufwändig sind und eine vergleichsweise lange Rechenzeit benötigen.

So ist beispielsweise aus DE 103 38 994 A1 ein Verfahren zum Betrieb eines Fahrwerkregelsystems bekannt, bei dem eine Steuergröße für einen Aktuator durch bereitstellen eines erstens Signals, das repräsentativ für eine Querbeschleunigung des Fahrzeuges ist, durch bereitstellen eines zweiten Signals, das repräsentativ für einen Längswinkeleinschlag ist und bereitstellen eines dritten Signals, das repräsentativ die Geschwindigkeit des Fahrzeugs ist, erzeugt wird.

Aus EP 1 518 722 A2, JP 2006 069527 A und WO 2006/126342 A1 sind jeweils Verfahren und Systeme zur Beeinflussung der Bewegung eines in seinen Bewegungsabläufen steuerbaren oder regelbaren Fahrzeugsaufbaus eines Kraftfahrzeuges bekannt, bei denen momentane querdynamische Zustandsgrößen bei der Ermittlung von Steuersignalen zur Ansteuerung von Aktuatoren ermittelt werden.

Aus DE 101 35 020 B4 ist ein Verfahren zur Erkennung einer Umkippgefahr eines Fahrzeuges bekannt, bei dem eine die Querdynamik des Fahrzeuges beschreibende Größe ermittelt wird und diese mit wenigstens einem charakteristischen Schwellwert für die Querdynamik des Fahrzeuges verglichen wird.

Bekannt sind im Wesentlichen drei Dämpfersysteme für Fahrzeuge, wobei einer Federanordnung zwischen Rad und Aufbau ein Aktuator parallel geschaltet ist. Bekannt sind passive, semi-aktive und aktive Dämpfersysteme. Bei passiven Dämpfersystemen ist eine Veränderung der Dämpferkraft während des Fahrbetriebes nicht vorgesehen. Bei semi-aktiven Dämpfersystemen kann die Dämpferkraft durch eine Veränderung eines Ölfluidstromes unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.

Bei den bekannten Verfahren und Systemen zur Beeinflussung der Bewegung des Fahrwerkes ist auch nachteilig, dass als Ausgangsgröße aus eingesetzten Reglermodulen eine Kraft angefordert wird. Dies hat den Nachteil, dass zusätzlich eine Dämpfergeschwindigkeit als Zusatzgröße benötigt wird, um über eine Kennfeldumrechnung zu der eigentlichen Stellgröße, dem Steuerstrom, zu gelangen. Darüber hinaus kann auch bei einer konstanten Kraftanforderung der Strom sich in Abhängigkeit von der Dämpfergeschwindigkeit ändern. Da eine Kennfeldumrechnung fehlerbehaftet ist, wird auch die resultierende Dämpferkraft entsprechend unstetig. Gerade im Bereich von niedrigen Dämpfergeschwindigkeiten, die insbesondere häufig bei Querdynamikvorgängen vorliegen, ist dies nachteilig, da hier die größten Nichtlinearitäten und Ungenauigkeiten im Kennfeld vorliegen. Darüber hinaus ist bekannt, dass im Geschwindigkeitsnulldurchgang im Kennfeld der Dämpfer in der Regel weich gestellt wird. Gerade bei Dämpfergeschwindigkeiten, die um null herum pendeln wird dann bei einer konstanten Kraftanforderung ein ständig pendelnder Strom gestellt, der kontraproduktiv für die eigentliche Regelung ist.

Der Erfindung liegt daher die Aufgabe zugrunde, ein Verfahren und ein System der gattungsgemäßen Art anzugeben, mittels denen in einfacher und sicherer Weise eine Regelung der Bewegung eines Fahrzeugaufbaus mit elektronisch ansteuerbaren Aktuatoren (Dämpfern) möglich ist, wobei insbesondere ein querdynamisches Fahrverhalten beeinflussbar ist.

Erfindungsgemäß wird diese Aufgabe durch ein Verfahren mit den im Anspruch 1 genannten Merkmalen gelöst. Dadurch, dass mittels des Dämpferreglers aus den Sensorsignalen unter Berücksichtigung von momentanen und erwarteten querdynamischen Zustandsgrößen das wenigstens eine Steuersignal zur Ansteuerung der Aktuatoren ermittelt wird, ist vorteilhaft möglich, durch die Berücksichtigung der momentanen und/oder erwarteten querdynamischen Zustände bei der Bereitstellung der Steuersignale für die Aktuatoren, das heißt also bei der Einstellung der Dämpfung der Bewegung des Fahrzeugaufbaus Rechnung zu tragen. Dies gilt auch bei mit großer Wahrscheinlichkeit zu erwartenden künftigen Querbeschleunigungen. Neben den Komfortanforderungen eines Fahrzeugführers, werden die querdynamischen Fahrzustände des Fahrzeuges, insbesondere auch unter Berücksichtigung sicherheitskritischer Zustände, berücksichtigt.

Da mittels des Dämpferreglers aus den Sensorsignalen unter Berücksichtigung von momentanen und erwarteten querdynamischen Zustandsgrößen das wenigstens eine Steuersignal zur Ansteuerung der Aktuatoren ermittelt wird, wobei insbesondere die Größe mit Vorhalt aq_vorh auf einem Beobachtermodell basiert, zum Beispiel einem Einspurmodell. Derartige Beobachtermodelle sind an sich bekannt, ihr praktischer Einsatz bei einer Regelung der Vertikaldynamik bringt aber überraschende Vorteile. Durch die erfindungsgemäßen Maßnahmen ist es möglich, frühzeitig auf zu erwartende und aufkommende Querbeschleunigungen zu reagieren, so dass deren Wirkung schon von Beginn an in Grenzen gehalten werden kann.

Die Erfindung besteht im Prinzip also darin, mehrere Eingangsgrößen zu Zustandsgrößen zusammenzufassen, die in ihrer Aussagefähigkeit hinsichtlich der Querbeschleunigung die Aussagefähigkeit einer einzigen Eingangsgröße erheblich überragen. Dabei müssen die einzelnen Eingangsgrößen durchaus nicht die gleichen physikalischen Einheiten besitzen. Mit Hilfe des Prinzips der Erfindung können Eingangsgrößen mit unterschiedlichen physikalischen Einheiten durch eine entsprechende Bewertung und Gewichtung zu einer gemeinsamen Zustandsgröße sinnvoll zusammengefasst werden. Diese Zustandsgrößen können beispielsweise die Querbeschleunigung, ein Querruck, ein fahrsicherheitsbetonter Zustand (EPP-Eingriff) oder dergleichen sein.

Ein Nachteil der Querbeschleunigung regelnden bekannten Regelungssysteme ist nicht nur, dass sehr wenige oder nur eine Eingangsgröße berücksichtigt werden sondern zusätzlich es sich nur um Größen handelt, die die Bewegung zeitlich relativ spät detektieren. Das Fahrzeug muss sich erst querdynamisch Weiterbildung der Erfindung ebenfalls ein sehr wichtiges Ziel, durch das erfindungsgemäße Verfahren Signale abgeben zu können, mit deren Hilfe möglichst frühzeitig einer Querbeschleunigung im Bedarfsfall entgegengewirkt werden kann. Der Vorteil besteht im Wesentlichen darin, dass als Eingangsgröße auch Signale verwendet werden, die einen Vorhalt gegenüber der tatsächlich messbaren Querbeschleunigung besitzen.

Zusätzlich zu der festgestellten tatsächlichen Querbeschleunigung und gegebenenfalls zu dem Beobachtermodell zur Bestimmung der gewünschten Zustandsgröße ist bevorzugt vorgesehen, dass weitere Eingangsgrößen Verwendung finden, die einen querdynamischen Bezug aufweisen, wie beispielsweise die ESP-Anforderung oder andere Anforderungen aus Fahrerassistenzsystemen. Besonders vorteilhaft ist hier, dass die genannten zusätzlichen Eingangsgrößen vielfach ohnehin zur Verfügung stehen und somit problemlos verarbeitet werden können.

In weiterer bevorzugter Ausgestaltung der Erfindung ist vorgesehen, die Eingangsgrößen miteinander zu kombinieren, wobei die Kombination derart geschehen kann, dass schließlich eine oder mehrere, die Querbeschleunigung beschreibende, Zustandsgrößen gewonnen werden. Gemäß bevorzugter Ausgestaltung der Erfindung können sich die gebildeten Zustandsgrößen in ihrer Ausrichtung voneinander unterscheiden, indem beispielsweise diese Zustandsgrößen auf sportliches oder komfortables Fahren ausgerichtet sein können. Die unterschiedliche Ausrichtung beziehungsweise Ausprägung ergibt sich dabei durch eine bevorzugte unterschiedliche Gewichtung und Bewertung der Eingangsgrößen in einer geeigneten Kombinationseinheit.

Um mit Maßnahmen der Regelung auch gegen einen Querruck vorgehen zu können ist darüber hinaus in bevorzugter Ausgestaltung der Erfindung vorgesehen dass aus den Querbeschleunigungsgrößen aq, aq_vorh über Differenzierung beziehungsweise Differenzierung und Filterung eine beziehungsweise mehrere Querruckgrößen i_daq_ges erzeugt werden. Rechnerisch bildete der Querruck die Ableitung aus der Querbeschleunigung. Der Querruck bildet weiterhin den Vorteil, dass er direkt zu Beginn der Querbeschleunigung einsetzt und entsprechend den Aufbau der Querbeschleunigung bewertet. Der Querruck wird dabei sinnvollerweise nicht nur aus der reinen gemessenen Querbeschleunigung ermittelt sondern kann ebenfalls von allen Eingangsgrößen ermittelt werden, die eine Aussage über die Querbeschleunigung machen.

Um den nachgeschalteten Regler nicht mit einer Vielzahl von Möglichkeiten der Einstellung zu überfrachten und um die notwendige Zeit zur Bestimmung der Steuergröße am Ausgang des Reglers zu verkürzen ist ferner bevorzugt vorgesehen, dass die Querruckgrößen i_daq_ges in einer oder mehreren Einheiten ähnlich zur Querbeschleunigung umgerechnet, gewichtet, gefiltert und/oder kombiniert werden.

In weiterer bevorzugter Ausgestaltung der Erfindung können zur verbesserten Anpassung der Steuergröße am Ausgang des Reglers an den Fahrzustand des Fahrzeugs die ermittelten Zustandsgrößen in einem Korrigierer mittels weiterer Eingangsgrößen korrigiert werden, wobei beispielsweise der Fahrzustand insbesondere hinsichtlich der Längsdynamik (gegebenenfalls auch Vertikaldynamik), der Beladungszustand, der Straßenzustand oder die Aktivität des Fahrers berücksichtigt werden können.

Ferner ist in bevorzugter Ausgestaltung der Erfindung vorgesehen, dass die Steuergröße am Ausgang des Reglers der Stellgröße des Aktors, insbesondere des Dämpfers, proportional ist. Da die Stellgröße eines semi-aktiven Dämpfers ein Strom ist, wird in diesem Falle die Steuergröße bevorzugt ein Strom sein.
Um die einzelnen entsprechend einem der vorangegangenen Ansprüche gebildeten Zustandsgrößen getrennt behandeln zu können ist in weiterer bevorzugter Ausgestaltung der Erfindung vorgesehen, dass die existierenden Querbeschleunigungszustände aq_vorh*, aq* und/oder die existierenden Querruckzustände daq und/oder die fahrsicherheitsbetonten Zustände (ESP-Bit) in parallel angeordneten Steuerungen Eingang finden. Dabei ist die Zahl der gebildeten Zustandsgrößen nicht auf zwei Zustandsgrößen beschränkt. Es kann beispielsweise noch zusätzlich eine Zustandsgröße aus entsprechenden Eingangsgrößen gebildet werden, die die Fahrsicherheit des Fahrzeugs betont, und dementsprechend ihre Berücksichtigung bei der Regelung anderer Größen findet.

Bevorzugt können die Ausgangsgrößen der genannten Steuerungen in geeigneter Weise miteinander kombiniert werden. Die Kombination der Eingangsgrößen kann dabei mit unterschiedlicher Ausrichtung erfolgen, die sich in der abweichenden Gewichtung und Bewertung der einzelnen Eingangsgrößen äußert. Die Ausrichtung kann dabei von den Zuständen komfortables Fahren beziehungsweise sportliches Fahren ausgehen, wobei bei dem letztgenannten Zustand eine höhere Fahrsicherheit beziehungsweise geringere Radlastschwankung erzielt werden sollen.

Um den Einfluss der weiteren Eingangsgrößen dem Einfluss zusätzlicher Eingangsgrößen entkoppeln zu können ist bevorzugt vorgesehen, dass die Steuerungsausgangsgröße(n) (i_aq, i_aq_ges) über weitere Eingangsgrößen (Energ, Modus) modifiziert werden, insbesondere den energetischen Straßenzustand, der Fahrdynamik (eher komfortorientiert oder eher sportlich) oder die Moduswahl (zum Beispiel Tasterstellung der Dämpferregelung). Dabei werden die zur Korrektur dienenden, zusätzlichen Eingangsgrößen erst am Ausgang des Reglers angebracht, wobei es sich bei den zusätzlichen Eingangsgrößen beispielsweise um Signale handeln kann, die der durch die Straße in die betreffenden zu regelnden Körper (Aufbau, Rad, Dämpfer) des Fahrzeugs eingebrachten Energie entsprechen. Eine weitere Eingangsgröße kann beispielsweise durch den Modus gebildet sein, in welchem das Fahrzeug geregelt wird, zum Beispiel sportlich oder komfortabel, wobei dieser Modus entweder vom Fahrer wählbar eingestellt werden kann oder durch Messwerte durch das Regelungssystem festgestellt wird.

Da zum Beispiel die Ausgangssignale von bestimmten Modellen (zum Beispiel Einspurmodell) nur in einem bestimmten Wertebereich hinreichend gültig sind, ist in bevorzugter Ausgestaltung der Erfindung vorgesehen, dass die Modifikation auch in einer Begrenzung des Steuergrößenbereichs, zum Beispiel in Form von Min- und/oder Maxgrenzen, erfolgen kann. Aber nicht nur die Ausgangssignale von Modellen sondern auch andere Signale können nur beschränkt gültig sein oder sollen beschränkt werden, um nachteilige Folgen am Fahrzeug zu verhindern. So darf beispielsweise der Dämpfer nur mit Strömen begrenzter Höhe angesteuert werden, um diesen nicht bei hoher Relativgeschwindigkeit des Dämpfers zu beschädigen.

In einer besonders bevorzugten Ausgestaltung der Erfindung ist vorgesehen eine zusätzliche Informationsgröße über den Zustand der Querdynamik zu bilden, die in parallel arbeitenden Regelungssystemen des Fahrzeugs Einfluss nehmen soll. So ist es sicherlich vernünftig, bei festgestelltem hohem Querruck zum Beispiel die Wankkomponente der Regelung der Vertikalbewegung des Aufbaus zu verstärken. Auch sollten die mehr fahrsicherheitskritischen Anforderungen von Längs- und Querdynamik sich nicht gegenseitig beeinflussen oder stören. Dabei kann diese Informationsgröße aus Ausgangsgrößen der Steuerung, zum Beispiel dem Querruckstrom, oder von Zustandsgrößen abgeleitet sein. Es kann aber auch zweckmäßig sein die Informationsgröße aus der Ermittlung einer Steuertendenz/Steuerntendenzabweichung abzuleiten.

Schließlich kann eine Zustandbewertung dahingehend erfolgen, ob dieser Zustand vermehrt Komfort gestattet oder ob aus Sicherheitsgründen die Radlast optimiert werden muss, wobei diese Zustandbewertung in anderen, parallel arbeitenden Regelungsmodulen Verwertung finden kann. Die ermittelten Größen können dabei entsprechend die Regelung der vertikalen Dynamik und/oder der Längsdynamik beeinflussen, aber auch Einfluss auf eine Stromberechnungseinheit nehmen.

Vielfach ist es so, dass die ein bestimmtes Verhalten der Regelung anfordernden Signale schon abgeklungen sind, während die in ihrer Bewegung zu regelnden Körper des Fahrzeugs sich aufgrund der Trägheit des Systems noch nicht in dem gewünschten Zustand befinden. Um hier die für die Einstellung des gewünschten Zustandes dienenden Signale nicht zu früh enden zu lassen, ist bevorzugt vorgesehen, dass zusätzlich eine oder mehrere Halteabklingfunktionen entweder bei einer oder mehrerer Ausgangsgrößen i_aq, i_daq, i_esp aus der Steuerung der Querbeschleunigungs- und der Querruckzustandsgröße i_daq_ges oder der daraus kombinierten Ausgangsgröße oder der querdynamischen Eingangsgrößen oder der querdynamischen Zustandsgrößen Verwendung findet. Bei der Gestaltung der Halteabklingfunktion ist in weiterer bevorzugter Ausgestaltung vorgesehen, dass zusätzlich die Halteabklingfunktion aus einem Anteil besteht, der die Eingangsgröße aq_vorh*, aq* über eine definierbare Zeitspanne hält und/oder über eine zweite definierbare Zeitspanne abklingen lässt (linear, quadratisch oder entsprechend einer anderen mathematischen Funktion).

Erfinderisch werden die Steuerungsausgangsgröße(n) (i_aq, i_aq_ges) über weitere (Eingangs- ) Größen (Energ, Modus) modifiziert, insbesondere den energetischen (Straßen)-Zustand, der Fahrdynamik (eher komfortorientiert oder eher sportlich) oder die Moduswahl (zum Beispiel Tasterstellung der Dämpferregelung). Erfinderisch kann die Modifikation auch in einer Begrenzung des Steuergrößenbereiches, zum Beispiel in Form von Min- und/oder Maxgrenzen, erfolgen.

Es ist erfinderisch, dass zusätzlich eine Querzustandsinformationsgröße (x_quer, x_quer) für die Verwendung in anderen Regelungs-Modulen entweder aus der Steuerungsausgangsgröße (i_aq, i_daq, i_esp) oder aus den Zustandsgrößen (x_quer, i_quer) oder aus der Ermittlung der Steuertendenz/Steuertendenzabweichung erzeugt wird.

Es ist weiterhin erfinderisch, dass zusätzlich eine querdynamische Zustandsbewertung erfolgt, das heißt eine Bewertung, ob es sich mehr um einen Zustand handelt, der Komfortgesichtspunkte erfordert oder einen Zustand, der Radlastoptimierungsgesichtspunkte erfordert, und diese Bewertung in anderen Regelungs-Modulen Verwendung findet.

Im Sinne der Erfindung ist es, dass die Querzustandsinformationsgröße und die querdynamische Zustandsbewertung in der Vertikaldynamikregelung, der Längsdynamikregelung und/oder der Stromberechnungseinheit Eingang finden.

Es ist ebenfalls erfinderisch, dass zusätzlich eine oder mehrere Halteabklingfunktionen entweder bei einer oder mehrerer Ausgangsgrößen (i_aq, i_daq, i_esp) aus der Steuerung der Querbeschleunigungs- und der Querruckzustandsgröße (i_daq_ges) oder der daraus kombinierten Ausgangsgröße oder der querdynamischen Eingangsgrößen oder der querdynamischen Zustandsgrößen Verwendung findet. Zusätzlich besteht die Halteabklingfunktion aus einem Anteil, der die Eingangsgröße (aq_vorh*, aq*) über eine definierbare Zeitspanne hält und/oder über eine zweite definierbare Zeitspanne abklingen lässt (linear, quadratisch oder entsprechend einer anderen mathematischen Funktion).

Es gehört zur Erfindung, dass die Querruckzustandsgröße (i_daq_ges) als Eingangsgröße für eine Wankregelung Verwendung findet.

Die Aufgabe wird ferner durch ein System zur Beeinflussung der Bewegung eines in seinen Bewegungsabläufen steuerbaren oder regelbaren Fahrzeugaufbaus eines Kraftfahrzeuges, mit Sensoren, welche die Bewegung des Fahrzeugaufbaus erfassen, mit steuerbaren oder regelbaren Aktuatoren, insbesondere semi-aktiven oder aktiven Dämpfern, die zwischen dem Fahrzeugaufbau und den Fahrzeugrädern angeordnet sind, mit einem Dämpferregler, mittels dem die Sensorsignale verarbeitet werden und wenigstens ein Ansteuersignal für die Aktuatoren bereitgestellt wird gelöst, wobei der Dämpferregler Regelungsmodule umfasst, mittels denen aus den Sensorsignalen unter Berücksichtigung von momentanen und erwarteten querdynamische Zustandsgrößen, wenigstens ein Steuersignal für die Aktuatoren generierbar ist.

Im Sinne der Erfindung ist ein Fahrzeug, insbesondere ein Kraftfahrzeug, mit einem System zur Beeinflussung der Bewegung eines in seinen Bewegungsabläufen steuerbaren oder regelbaren Fahrzeugaufbaus mit einem der genannten Merkmale ausgestattet.

Zusammenfassend kann die Erfindung wie folgt beschrieben werden.

In Erweiterung des Stands der Technik sollen querdynamische Zustandsgrößen (das heißt Größen entlang der y-Achse) zur Steuerung Verwendung finden, wobei eine Kombination von prädiktiven und aktuell messbaren Größen vorgenommen werden soll. Diese Verknüpfung stellt einen essentiellen Unterschied zum Stand der Technik dar. Die prädiktiven Größen resultieren dabei aus einer Beobachterstruktur, zum Beispiel in Form eines Einspurmodells. Vorteilhaft bei einer Kombination eines Signals (zum Beispiel der Querbeschleunigung) mit einem Signal mit Vorhalt (zum Beispiel einem Modell) ist, dass bereits ein Steuersignal erzeugt wird, bevor das Fahrzeug die Bewegung real ausgeführt hat.

Durch ein früheres Agieren können sowohl spezifische Ausprägungen wie Steuertendenz besser beeinflusst werden wie auch die Gesamtbewegung früher gedämpft werden. Als zweites Signal soll ein Messsignal verwendet werden. Dies ist notwendig, da Beobachterstrukturen immer nur begrenzte Gültigkeit haben (zum Beispiel nur bis zu einer maximalen Querbeschleunigung) und ferner nicht alle querdynamischen Fälle abbilden. Wenn zum Beispiel kein Lenkradwinkel aufgebracht wird, sich das Fahrzeug aber querdynamisch bewegt, so würde dies über ein Einspurmodell nicht erfasst.

Optimal ist somit die Kombination eines Querbeschleunigungssignals mit Vorhalt aus einer Beobachterstruktur mit einer gemessenen Querbeschleunigung.

Es wird an dieser Stelle darauf hingewiesen, dass es sich um eine Steuerung handelt, da zur Regelung eine Rückführeinheit benötigt wird und ferner es nicht möglich ist querdynamische Größen über einen vertikal angebrachten Aktor wie einen Dämpfer zu regeln.

Es ist nun sowohl möglich, diese zwei Signale zu einem querdynamischen Zustandssignal zusammenzufassen und dieses zu steuern als auch für beide Signale parallele Steuerstrukturen aufzubauen. Ferner können weitere Signale, wie beispielsweise die Gierrate, einbezogen werden. Hier ist auch eine Korrektur der Querbeschleunigung mit der Gierrate und dergleichen möglich, um so Querbeschleunigungen an bestimmten Fahrzeugpunkten zu ermitteln.

Vorteilhaft ist es, die Querbeschleunigung möglichst früh zu kennen, sinnvoll wäre daher die Anbringung des Sensors an der vorderen Stoßstange des Fahrzeugs. Da dies in Realität meist nicht der Fall ist, finden diesbezüglich häufig Korrekturen über die Gierrate statt, um so ein frühes Gesamtsignal zu erhalten. Ebenso ist es möglich keinen Querbeschleunigungssensor zu verwenden sondern nur einen Gierratensensor. Wichtig ist, dass mindestens ein Messsensor existiert.

Bei dem Signal mit Vorhalt, das beispielsweise aus einem Beobachter resultiert, ist es wichtig, den Signalbereich entsprechend der Modellgültigkeit einzuschränken, so dass beispielsweise nicht Beschleunigungen von > 1g aufgrund einer bestimmten Lenkwinkeldynamik resultieren. Hier ist besonders auf einen kontinuierlichen Übergang zwischen validem und nicht validem Modell Wert zu legen.

Essentiell sowohl für das Empfinden des Fahrers als auch für die Fahrzeugbewegung ist ferner die Änderung der Querdynamik, zum Beispiel in Form des Querrucks in m/s³. Hierbei existiert ebenfalls die Möglichkeit zunächst alle Eingangsgrößen einzeln zu differenzieren und bedarfsgerecht zu filtern oder aber erst die kombinierte Zustandsgröße zu differenzieren und zu filtern. Beide Ausprägungen haben Vor- und Nachteile.

Falls man die kombinierte Zustandsgröße verwendet, so ist besonders Wert darauf zu legen, dass die Signale mit und ohne Vorhalt kontinuierlich ineinander übergehen. Ferner ist meist eine vorangeschaltete separate Filterung notwendig, da beide Signale sehr unterschiedliche Rauschanteile aufweisen.

Bei der separaten Differenzierung können die Signale unabhängig voneinander gefiltert und differenziert werden, allerdings ist hiermit ein etwas erhöhter Rechenaufwand verbunden. Parametrierseitig bestehen keine wesentlichen Unterschiede, da jeweils dieselben Applikationsparameter für die parallelen Steuereinheiten verwendet werden könnten. Allerdings ist dies keine Notwendigkeit.

In einer vorteilhafter Weiterführung sind die Eingangsgrößen oder die querdynamischen Zustandsgrößen veränderbar, zum Beispiel in Abhängigkeit von der Fahrgeschwindigkeit, dem energetischen (Straßen-)Zustand, dem Beladungszustand oder aber der gewünschten Fahrdynamik (sportlich-/komfortorientiert) und dergleichen. Ferner ist es in einer weiteren Ausprägung möglich auch das ESP-Signal entsprechend zu integrieren.

In einer weiteren Ausführung ist es möglich, einen Gesamtquerdynamikzustand aus dem Querbeschleunigungszustand und dem Querruckzustand zu ermitteln, der als Information in anderen Modulen Eingang finden kann. Es empfiehlt sich hier, zunächst eine resultierende Ausgangssteuergröße aus diesen beiden Eingangsgrößen zu ermitteln und diese als Informationsgrundlage zu verwenden. Dieser Gesamtquerdynamikzustand ist zum Beispiel besonders vorteilhaft in Kombination mit der Vertikaldynamikregelung, da diese zum Beispiel auch auf Wankbewegungen regelt. Hilfreich kann dies jedoch auch bei stärker sicherheitsbetonten Aspekten in der Längsdynamik sein, so dass keine unerwünschten Sprünge zwischen den Anforderungen aus Längs- und aus Querdynamik entstehen.

Des Weiteren ist es möglich, anhand der Zustandsgrößen eine Einschätzung zu treffen, wie weit der Zustand komfortorientiert oder sportlich/sicherheitsorientiert ist.

Diesbezüglich ist es auch möglich, ähnlich wie im ESP eine Übersteuer- beziehungsweise Untersteuertendenz zu ermitteln, da diese gleichzeitig ein Maß für den Fahrsicherheitszustand darstellt. Dies ist besonders einfach möglich, da ein Einspurmodell bereits verwendet wird. Diese Information des Querdynamikzustands kann unter anderem für eine nachgeschaltete Steuergrößenauswahl aus den unterschiedlichen Reglern (wie Vertikaldynamik, Querdynamik, Längsdynamik, Endlagen und dergleichen) zur Ermittlung dienen, welches Modul mit welchem Anteil durchgeschaltet wird.

In der Zustandsgrößenberechnung nachgeschalteten Reglerelementen wird vorteilhafterweise einmal entsprechend der/den Querbeschleunigungs-Zustandsgrößen und zum anderen parallel auf die Querruck-Zustandsgrößen gesteuert.

Ferner ist es möglich, eine Steuerung für ESP-Eingriff mit einzubinden. Bei ESP-Eingriff handelt es sich eigentlich immer um fahrsicherheitskritischere Vorgänge, bei denen besonders auf eine geringe Radlastschwankung zu achten ist. Entsprechend ist bei der Steuerung darauf zu achten, dass weder ein Unter- noch ein Überdämpfen stattfindet. Eventuell können dafür auch mehrere parallele Reglereinheiten verwendet werden.

In einem Kombinierer ist es möglich, alle oder ausgewählte Ausgänge miteinander zu verknüpfen. Dies kann in unterschiedlichster Form (wie Max-Bildung, Min-Bildung und dergleichen) erfolgen, auch abhängig davon ob es sich um einen mehr komfortorientierten oder einen sport-/sicherheitsorientierten Zustand handelt. Es ist nicht direkt notwendig einen Kombinierer an dieser Stelle zu integrieren, sondern es kann auch erst ein Zusammenfassen aller Regleranforderungen in einem nachgelagerten Reglermodul erfolgen. Vorteilhaft bei Verwendung eines Kombinierers ist jedoch, dass eine Zustandsgröße für den Querzustand gefunden werden kann, die durch die Reglerausgangsgröße des Kombinierers definiert wird.

Da die aus der Querdynamik resultierenden Fahrzeugbewegungen sich langsamer aufbauen, ist es vorteilhaft, entweder die Eingangs- oder die Ausgangsgrößen der Steuerung zeitlich abklingen zu lassen. Besonders empfehlenswert ist dies insbesondere für den Querruck. Im Allgemeinen ist es günstiger, die Ausgangsgröße zu halten und nachfolgend abklingen zu lassen, da so ein stetiger Verlauf sichergestellt ist. Je nach Parameterapplikation beziehungsweise Kombination der unterschiedlichen Zustandsausgangsgrößen können bei einem Halteabklingen der Eingangsgröße Sprünge auftreten, die eher unerwünscht sind. Das Abklingen selbst setzt sich vorteilhafterweise aus einem Halteteil und einem Abklingteil zusammen, wobei letzterer linear, quadratisch oder ähnlich erfolgen kann.

Als Ausgangsgröße der querdynamischen Steuerung empfiehlt sich eine Größe, die direkt proportional abhängig von der Steuergröße des Aktors ist, also beispielweise der Dämpferstrom.

In einer weiteren Ausprägung soll die resultierende querdynamische Steuerausgangsgröße veränderbar sein zum Beispiel in Abhängigkeit von dem energetischen (Straßen-)Zustand oder aber der gewünschten Fahrdynamik (sportlich-/komfortorientiert). Da Radlastschwankungen direkt von der Aktor-(Dämpfer-)kraft abhängig sind, die wiederum eine Folge der Stellgröße, zum Beispiel des Strom, ist, sollte die Abhängigkeit von energetischen Zuständen oder der gewünschten Fahrdynamik am Ende der Steuerung erfolgen, da so eine Entkopplung dieser Einflussgrößen von den Applikationsparametern der Steuerung gegeben ist. Besonders wichtig ist dies bei fahrsicherheitsbetonten Manövern wie bei ESP-Eingriff.

In einer ganz anderen Ausprägung können die querdynamischen Zustandsgrößen statt in einer Querdynamiksteuerung auch als Vorsteuer-Eingangsgröße, zum Beispiel für Vertikaldynamikregelungen, Verwendung finden. Hierbei ist es vorteilhaft, die Querruck-Zustandsgröße zum Beispiel in einem Wankregler zu verwenden, da diese Größe wesentlich den Wankvorgang beeinflusst. Dies ist auch darin begründet, dass ein Dämpfer nur geschwindigkeitsabhängig arbeitet und keine Stützkräfte aufnehmen kann. Der sich einstellende Wankwinkel ist somit vom Dämpfer selbst unabhängig, der Dämpfer steuert lediglich, wie dieser Wankwinkel zeitlich aufgebaut wird.

Die Aufgabe wird ferner durch ein System zur Beeinflussung der Bewegung eines in seinen Bewegungsabläufen steuerbaren oder regelbaren Fahrzeugaufbaus eines Kraftfahrzeuges mit den in Anspruch 24 genannten Merkmalen gelöst. Dadurch, dass der Dämpferregler Regelungsmodule umfasst, mittels denen aus den Sensorsignalen unter Berücksichtigung von momentanen und/oder erwarteten querdynamischen Zustandsgrößen, wenigstens ein Steuersignal für die Aktuatoren generierbar ist, ist vorteilhaft möglich, den Dämpferregler modular aufzubauen und in im Fahrzeug bestehende Systeme, beispielsweise in ein Steuergerät, in einfacher Art und Weise zu integrieren.

Weitere bevorzugte Ausgestaltungen ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch ein Kraftfahrzeug mit einer Dämpferregelung;
- Figur 2: eine Prinzipskizze eines Kraftfahrzeuges mit vertikalen Eck-Aufbaugeschwindigkeiten;
- Figur 3: eine Prinzipskizze eines Kraftfahrzeuges mit vertikalen Modal-Aufbaugeschwindigkeiten;
- Figur 4: eine Prinzipskizze eines Kraftfahrzeuges mit im Dämpfersystem angeordneten Sensoren und den resultierenden Rad-, Aufbau- und Dämpfergeschwindigkeiten;
- Figur 5: eine Grobstruktur der Funktionsmodule einer Dämpferregelung;
- Figur 6: ein Blockschaltbild eines Standardregelkreises;
- Figur 7: ein Blockschaltbild eines erweiterten Regelkreises;
- Figur 8: die Berechnung der Querbeschleunigungszustandsgrößen aq* und aq_vorh*;
- Figur 9: eine Beispielsteuerung der Querbeschleunigungszustandsgrößen (Var. 1);
- Figur 10: eine Beispielsteuerung der Querbeschleunigungszustandsgrößen (Var. 2);
- Figur 11: eine Beispielsteuerung der Querruckzustandsgrößen (Var. 1);
- Figur 12: eine Beispielsteuerung der Querruckzustandsgrößen (Var. 2);
- Figur 13: eine Beispielermittlung einer Querzustandsinformation x_quer;
- Figur 14: eine Parallelschaltung verschiedener Quer-Steuerungen,
- Figur 15: einen Vertikaldynamikregler mit einer Korrektur über den Querdynamikzustand und
- Figur 16: einen Vertikaldynamikregler mit einer Kombination der Eingangsgrößen.

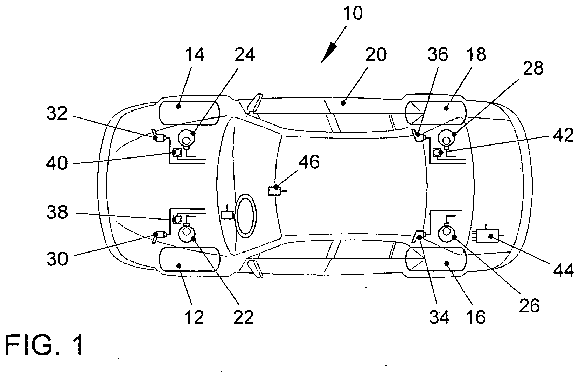

Figur 1 zeigt schematisch in Draufsicht ein insgesamt mit 10 bezeichnetes Kraftfahrzeug. Aufbau und Funktion von Kraftfahrzeugen sind allgemein bekannt, so dass im Rahmen der vorliegenden Beschreibung hierauf nicht näher eingegangen wird.

Das Kraftfahrzeug 10 besitzt vier Räder 12, 14, 16 und 18. Die Räder 12, 14, 16 und 18 sind über eine bekannte Radaufhängung an einem Aufbau 20 des Kraftfahrzeuges 10 befestigt. Unter Aufbau 20 wird im Rahmen der Erfindung allgemein die Fahrzeugkarosserie mit der Fahrgastzelle verstanden. Zwischen den Rädern 12, 14, 16 und 18 einerseits und dem Aufbau 20 ist jeweils ein Dämpfer 22, 24, 26 beziehungsweise 28 angeordnet. Die Dämpfer 22, 24, 26 und 28 sind parallel zu nicht dargestellten Federn angeordnet. Die Dämpfer 22, 24, 26 und 28 sind beispielsweise als semi-aktive Dämpfer ausgebildet, das heißt durch Anlegen eines Steuersignals an ein Stellmittel der Dämpfer kann die Dämpferkraft variiert werden. Das Stellmittel ist üblicher Weise als elektromagnetisches Ventil ausgebildet, so dass das Stellsignal ein Steuerstrom für das Ventil ist.

Jedem Rad beziehungsweise jedem Dämpfer ist ein Wegsensor 30, 32, 34 beziehungsweise 36 zugeordnet. Die Wegsensoren sind als Relativwegsensoren ausgebildet, das heißt diese messen eine Veränderung des Abstandes des Aufbaus 20 von dem jeweiligen Rad 12, 14, 16 beziehungsweise 18. Typischerweise werden hier sogenannte Drehwinkel-Wegsensoren eingesetzt, deren Aufbau und Funktion allgemein bekannt sind.

Der Aufbau 20 umfasst ferner drei an definierten Punkten angeordnete Vertikalbeschleunigungssensoren 38, 40 und 42. Diese Beschleunigungssensoren 38, 40 und 42 sind fest an dem Aufbau 20 angeordnet und messen die Vertikalbeschleunigung des Aufbaus im Bereich der Räder 12, 14 beziehungsweise 18. Im Bereich des linken hinteren Rades 16 kann die Beschleunigung aus den drei anderen Beschleunigungssensoren rechnerisch ermittelt werden, so dass hier auf die Anordnung eines eigenen Beschleunigungssensors verzichtet werden kann. Die Anordnung der Sensoren ist hier lediglich beispielhaft. Es können auch andere Sensoranordnungen, beispielsweise ein vertikaler Aufbaubeschleunigungssensor und zwei Drehwinkelsensoren oder dergleichen, zum Einsatz kommen.

Das Kraftfahrzeug 10 umfasst ferner ein Steuergerät 44, das über Signal- beziehungsweise Steuerleitungen mit den Stellmitteln der Dämpfer 22, 24, 26 und 28, den Wegsensoren 30, 32, 34 und 36 und den Beschleunigungssensoren 38, 40 und 42 verbunden ist. Das Steuergerät 44 übernimmt die nachfolgend noch näher zu erläuternde Dämpferregelung. Daneben kann das Steuergerät 44 selbstverständlich auch weitere, hier nicht zu betrachtende Funktionen innerhalb des Kraftfahrzeuges 10 übernehmen. Das Kraftfahrzeug 10 umfasst ferner ein Schaltmittel 46, beispielsweise einen Taster, ein Drehrad oder dergleichen, mittels dem von einem Fahrzeugführer eine Anforderung an die Bewegung des Aufbaus 20 gewählt werden kann. Hier kann beispielsweise zwischen der Anforderung "Komfort", der Anforderung "Sport" und der Anforderung "Basis" gewählt werden. Die Wahl ist entweder stufenförmig zwischen den drei Modi oder stufenlos mit entsprechenden Zwischenmodi möglich.

Das Schaltmittel 46 ist ebenfalls mit dem Steuergerät 44 verbunden.

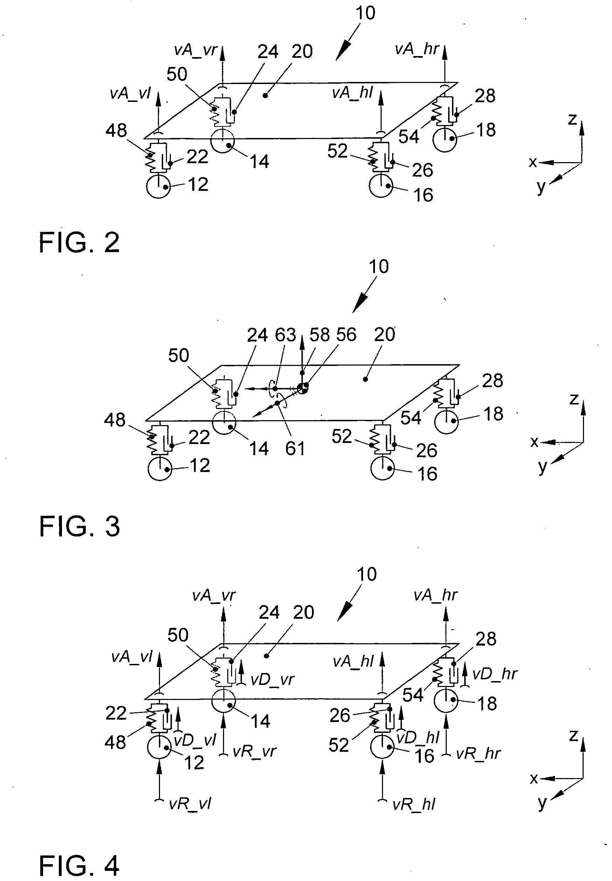

Figur 2 zeigt eine Prinzipskizze des Kraftfahrzeuges 10, wobei hier der Aufbau 20 als ebene Fläche angedeutet ist. An den Ecken des Aufbaus 20 sind jeweils die Räder 12, 14, 16 und 18 über eine Feder-Dämpfer-Kombination in an sich bekannter Art und Weise angeordnet. Die Feder-Dämpfer-Kombination besteht aus den Dämpfern 22, 24, 26 und 28 und jeweils parallel geschalteten Federn 48, 50, 52 und 54. An den Ecken des Aufbaus 20 sind die in Figur 1 dargestellten Beschleunigungssensoren 38, 40 beziehungsweise 42 angeordnet, mittels denen die vertikale Geschwindigkeit an den Ecken des Aufbaus 20 bestimmt werden kann. Hierbei handelt es sich um die Geschwindigkeiten vA-vl (Geschwindigkeit Aufbau vorne links), vA_vr (Geschwindigkeit Aufbau vorne rechts), vA_hl (Geschwindigkeit Aufbau hinten links) und vA_hr (Geschwindigkeit Aufbau hinten rechts). Die Geschwindigkeit kann aus den mittels der Beschleunigungssensoren gemessenen Beschleunigungen durch Integration errechnet werden.

Figur 3 zeigt wiederum die Prinzipskizze des Kraftfahrzeuges 10, wobei gleiche Teile wie in den vorhergehenden Figuren mit gleichen Bezugszeichen versehen und nicht nochmals erläutert sind. In einem Schwerpunkt 56 sind die Modalbewegungen des Aufbaus 20 verdeutlicht. Dies ist einerseits ein Hub 58 in vertikaler Richtung (z-Richtung), ein Nicken 61, das heißt eine Drehbewegung um eine in der y-Achse liegende Querachse, und ein Wanken 63, das heißt eine Drehbewegung um eine in der x-Achse liegende Längsachse des Kraftfahrzeuges 10.

Figur 4 zeigt eine weitere Prinzipskizze des Kraftfahrzeuges 10, wobei hier, in Ergänzung zu der Darstellung in Figur 2, weitere Signale dargestellt sind. Zusätzlich sind hier die Dämpfergeschwindigkeiten vD dargestellt, wobei vd-vl die Dämpfergeschwindigkeit für den Dämpfer 22 (vorne links), vD_vr die Dämpfergeschwindigkeit für den Dämpfer 24 (vorne rechts), vD_hl die Dämpfergeschwindigkeit für den Dämpfer 26 (hinten links) und vD_hr die Dämpfergeschwindigkeit für den Dämpfer 28 (hinten rechts) ist. Die Dämpfergeschwindigkeiten können über eine Differenzierung aus den Signalen der Wegsensoren 30, 32, 34 beziehungsweise 36 (Figur 1) ermittelt werden. In Figur 4 sind ferner die Radgeschwindigkeiten vR angedeutet. Hier steht Geschwindigkeit vR_vl für das Rad 12 (vorne links), vR_vr für das Rad 14 (vorne rechts), vR_hl für das Rad 16 (hinten links) und vR_hr für das Rad 18 (hinten rechts). Die Radgeschwindigkeiten vR können beispielsweise über Radbeschleunigungssensoren ermittelt werden.

Da sowohl die Aufbaugeschwindigkeiten vA, die Dämpfergeschwindigkeiten vD und die Radgeschwindigkeiten vR alle den gleichen Richtungsvektor besitzen (in z-Richtung), besteht der Zusammenhang vD=vA-vR. Hierdurch müssen nicht alle Messgrößen in Form von Messsignalen vorliegen, sondern können aus den anderen Messgrößen errechnet werden.

Anhand der bisherigen Erläuterungen wird deutlich, dass es für eine effektive Regelung des Bewegungsablaufes des Aufbaus auf die Bereitstellung eines Stellstromes für das Steuermittel der Dämpfer ankommt. Nachfolgend wird auf die Bereitstellung dieses Stellstromes unter Berücksichtigung der Umsetzung der erfindungsgemäßen Lösungen näher eingegangen.

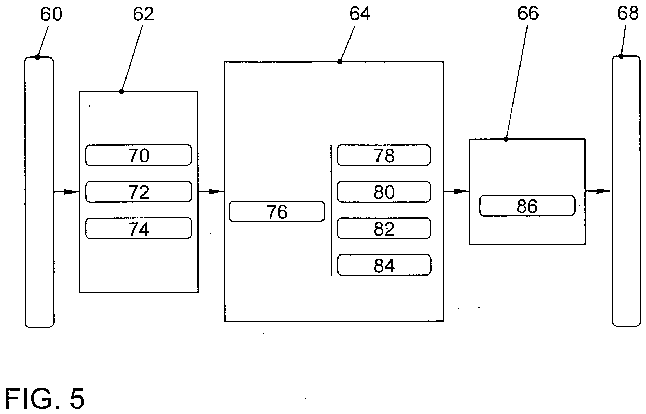

Figur 5 zeigt in einem Blockschaltbild eine Grobstruktur der Funktionsmodule zur erfindungsgemäßen Dämpferregelung. Die einzelnen Module sind aus Gründen der Übersichtlichkeit und Verständlichkeit gekapselt dargestellt. Die gesamte Struktur ist vorteilhafterweise hierarchisch über mehrere Ebenen aufgebaut. Die Funktionsmodule sind in einem Dämpferregler, vorzugsweise dem Steuergerät 44 (Figur 1) integriert. Die Dämpferregelung umfasst ein Signaleingangsmodul 60, ein Hilfsfunktionsmodul 62, ein Reglermodul 64, ein Auswertemodul 66 und ein Signalausgangsmodul 68. In dem Signaleingangsmodul 60 werden die Sensorsignale der Wegsensoren 30, 32, 34 beziehungsweise 36 und der Beschleunigungssensoren 38, 40 und 42 sowie weitere, über den CAN-Bus des Kraftfahrzeuges zur Verfügung stehende, Signale eingelesen. Das Hilfsfunktionsmodul 62 umfasst ein Man-Machine-Interfacemodul 70, ein Filtermodul 72 und ein Beladungserkennungsmodul 74.

Das Reglermodul 64 umfasst ein Straßenerkennungsmodul 76, ein Endlagendämpfungsmodul 78, ein Querdynamikmodul 80, ein Längsdynamikmodul 82 sowie ein Vertikaldynamikmodul 84. Das Auswertelogikmodul 66 umfasst ein Stromberechnungsmodul 86. Die Reglermodule 76, 78, 80, 82 und 84 generieren vorteilhafterweise einen Strom, oder eine Größe, die proportional zum Strom ist. Im Stromberechnungsmodul 86 findet die Stromberechnung aller Reglerausgangsgrößen zu Steuergrößen für die Dämpfer 22, 24, 26 beziehungsweise 28 statt. Über das Signalausgangsmodul 68 werden diese Stellströme den Dämpfern zur Verfügung gestellt. Sowohl das Signaleingangsmodul 60 als auch das Signalausgangsmodul 68 können optional selbstverständlich auch weitere Signale empfangen beziehungsweise ausgeben, je nach Ausstattung des betreffenden Kraftfahrzeuges.

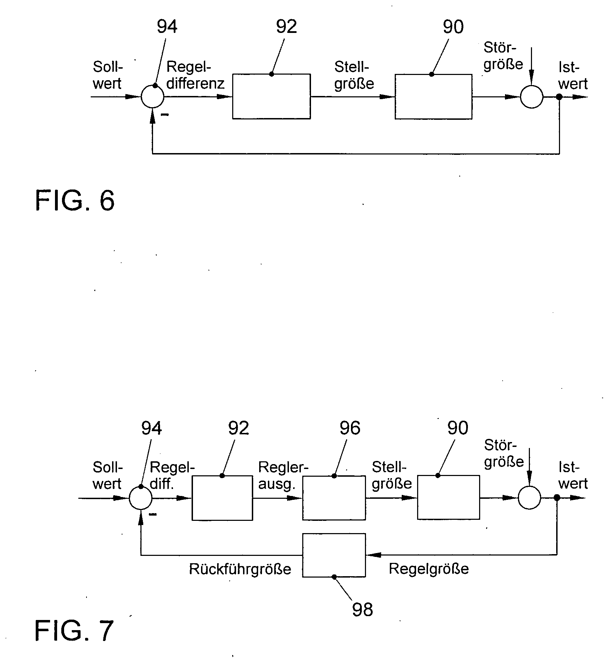

In Figur 6 ist ein Standardregelkreis dargestellt. Dieser besteht aus einer Strecke 90, einem Regler 92 und einer negativen Rückkopplung der Regelgröße, das heißt des Istwertes auf dem Regler 92. Die Regeldifferenz wird aus der Differenz zwischen Sollwert (Führungsgröße) und Regelgröße berechnet. Die Stellgröße wirkt auf die Strecke 90 und damit auf die Regelgröße. Die Störgröße bewirkt eine, normalerweise unerwünschte, Veränderung der Regelgröße, die kompensiert werden muss. Die Eingangsgröße des Reglers 92 ist die Differenz aus dem gemessenen Istwert der Regelgröße und dem Sollwert. Der Sollwert wird auch als Führungsgröße bezeichnet, dessen Wert durch den gemessenen Istwert nachgebildet werden soll. Da der Istwert durch Störgrößen verändert werden kann, muss der Istwert dem Sollwert nachgeführt werden. Eine in einem Vergleicher 94 festgestellte Abweichung des Istwertes von dem Sollwert, die sogenannte Regeldifferenz, dient als Eingangsgröße für den Regler 92. Durch den Regler 92 wird festgelegt, wie das Regelungssystem auf die festgestellten Abweichungen reagiert, beispielsweise schnell, träge, proportional, integrierend oder dergleichen. Als Ausgangsgröße des Reglers 92 ergibt sich eine Stellgröße, welche auf eine Regelstrecke 90 Einfluss nimmt. Die Regelung dient hauptsächlich zur Beseitigung von Störgrößen, um diese auszuregeln.

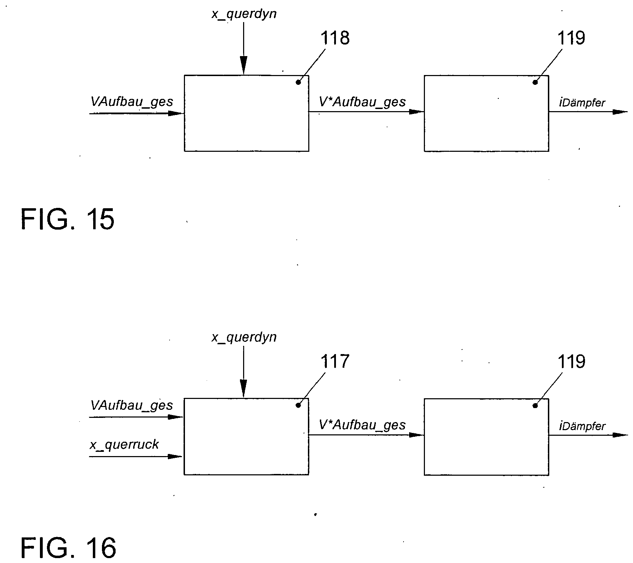

In Figur 7 ist eine detailliertere Darstellung des Regelkreises gemäß Figur 6 dargestellt. Es ist ein erweiterter Regelkreis mit den zusätzlichen Elementen Stellglied 96 und Messglied 98 gezeigt. Im Beispiel der erfindungsgemäßen Dämpferregelung setzt sich die Stelleinrichtung beziehungsweise das Stellglied 96 aus einer elektronischen Komponente und einer elektro-hydraulischen Komponente zusammen. Die elektronische Komponente entspricht dem Stromregler im Steuergerät 44, während die elektro-hydraulische Komponente dem elektrisch ansteuerbaren Ventil der Dämpfer 22, 24, 26 beziehungsweise 28 entspricht. In den nachfolgenden Ausführungen sollen diese jedoch nicht weiter betrachtet werden. Diese werden als ideal angenommen beziehungsweise ihr Einfluss wird vernachlässigt. Somit stimmt idealisiert der Reglerausgang, der die Steuergröße liefert, mit der Stellgröße überein oder ist zu dieser zumindest proportional. Der Regler 92 gemäß Figur 15 ist hierbei aufgeteilt in den eigentlichen Regler 92 und das Stellglied 96. Der Regler 92 dient dazu, eine Größe zu bestimmen, mit der auf eine durch den Vergleicher 94 festgestellte Regeldifferenz über das Stellglied 96 reagiert werden soll. Das Stellglied 96 liefert die notwendige Energie in der geeigneten physikalischen Form, um auf den Prozess beziehungsweise die Regelstrecke einzuwirken. In dem Messglied 98 wird der Istwert gemessen. Die Störgröße kann bei einer Regelung der Bewegung eines Fahrzeugaufbaus 20 in Unebenheiten der Fahrbahn, seitlich wirkenden Kräften, wie beispielsweise Wind oder dergleichen, oder ähnlichen Einflüssen begründet sein.

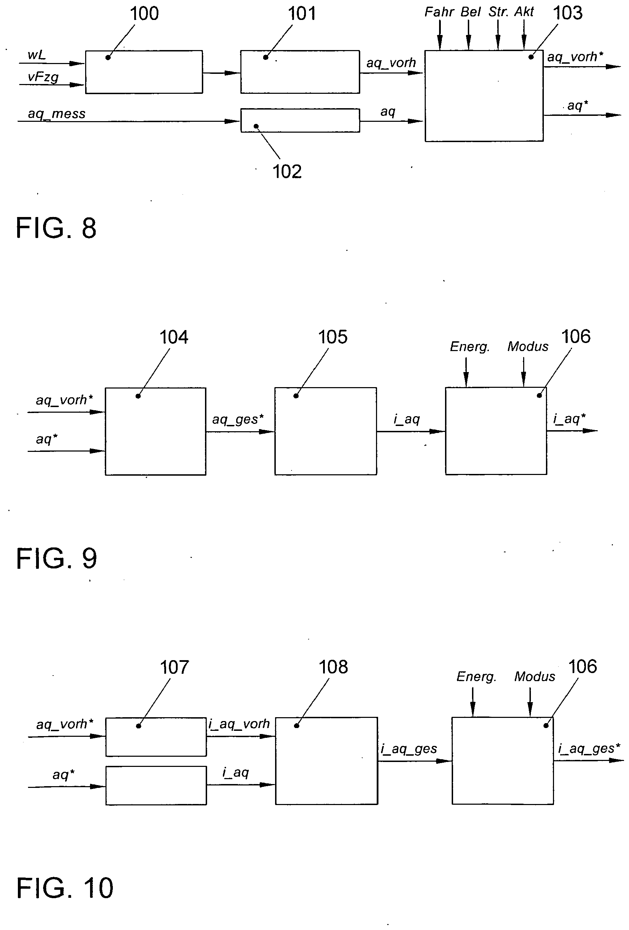

In Figur 8 wird einem Beobachter 100 ein, dem vom Fahrer eingestellten Lenkwinkel entsprechendes, Signal wL und die festgestellte Fahrzeuggeschwindigkeit vFzg zugeführt, wobei der Beobachter 100 daraus die Querbeschleunigung berechnet. Das Ausgangssignal des Beobachters wird in einem Begrenzer 101 begrenzt, da das Modell des Beobachters in der Regel nur für einen begrenzten Wertebereich hinreichend genau ist. Das Ausgangssignal aq_vorh des Begrenzers 101 hat gegenüber einem gemessenen Querbeschleunigungssignal aq_mess einen zeitlichen Vorhalt, da es von dem vom Fahrer am Lenkrad eingestellten Lenkwinkel abhängt, während das gemessene Beschleunigungssignal von dem dann später tatsächlich bestehenden Lenkwinkel des Rades abhängt. Wegen des, dem gemessenen Beschleunigungssignal innewohnenden Rauschens ist ein Filter 102 vorgesehen, welcher dieses Signal bereinigt. Die beiden Signale aq_vorh und aq werden einem Korrigierer 103 zugeführt, der diese Signale in Abhängigkeit vom Fahrzustand Fahr, dem Beladungszustand Bel, dem Zustand der Straße Str und den Aktionen des Fahrers Akt korrigiert und als korrigierte Ausgangssignale aq_vorh* und aq* ausgibt.

In Figur 9 werden die von dem Korrigierer 103 ausgegebenen Signale dem Eingang eines Kombinierers 104 zugeführt, der diese Eingangsignale in geeigneter Weise bewertet und miteinander kombiniert und sie schließlich als kombiniertes Ausgangssignal aq_ges* an einen Regler 105 ausgibt. Der Regler gibt an seinem Ausgang ein entsprechend seiner Regelkurve ausgestaltetes Ausgangssignal ab, wobei dieses Signal proportional zu dem Eingangsignal des nachgeschalteten Aktors sein sollte. In dem vorliegenden Fall handelt es sich bei dem Ausgangssignal des Reglers um einen Strom i_aq, der von einem Korrigierer 106 aufgrund zusätzlicher Eingangsgrößen Energ und Modus zu dem Ausgangssignal i_aq* korrigiert wird.

In Figur 10 werden die Eingangsignale gemäß Figur 9 zuerst von den Reglern 107 bearbeitet und in Stromsignale i_aq_vorh und i_aq umgewandelt, die dann in einem Kombinierer 108 zu einem kombinierten Stromsignal i_aq_ges verarbeitet werden. Die Korrektur in dem Korrigierer 106 entspricht wieder der Korrektur nach Figur 9. Die Behandlung der Eingangsignale in den Figuren 9 und 10 ist im Wesentlichen gleichwertig und austauschbar. Wesentlich ist, dass bei der Kombination in dem Kombinierer 104 beziehungsweise 108 eine sinnvolle Gewichtung der Eingangsignale vorgenommen wird, die den Anforderungen des Fahrzeugs gut entspricht.

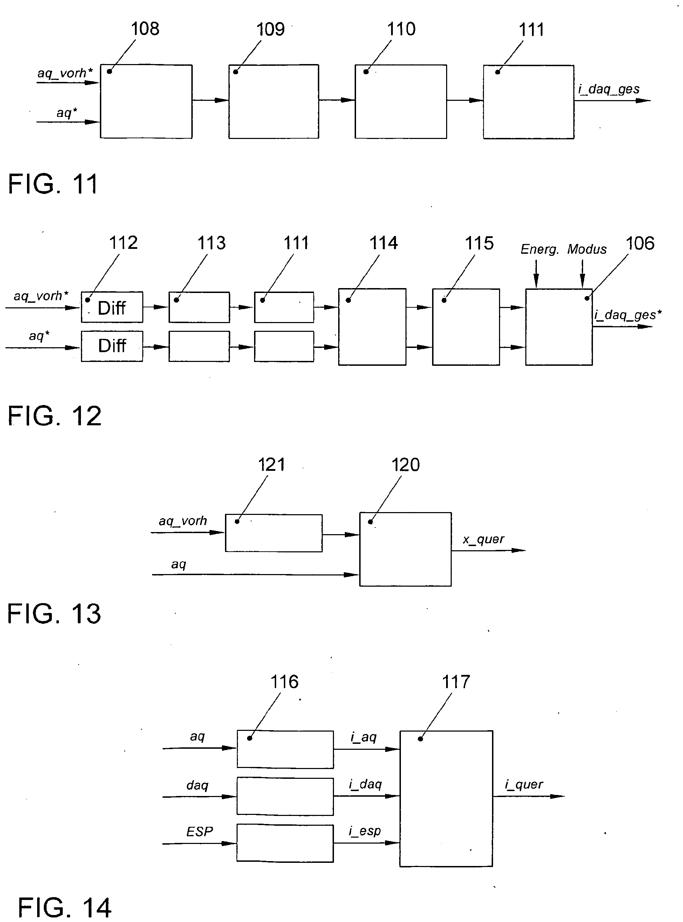

In Figur 11 wird aus den Ausgangssignalen entsprechend Figur 82 beziehungsweise Eingangssignalen entsprechend der Figuren 9 und 10 ein Ausgangssignal geformt, welches den Querruck in Folge der Querbeschleunigung bildet oder mit anderen Worten die Differenzierung beziehungsweise Ableitung des Querbeschleunigungssignals ist. Dazu werden die beiden Eingangsignale in einem Kombinierer 108 analog Figur 9 miteinander kombiniert und anschließend in einem Differenzierer 109 differenziert. Um das so gebildete Signal von Rauschen zu befreien ist ein Filter 110 vorgesehen, welcher das bereinigte und gegebenenfalls in Phase und Amplitude korrigierte Eingangsignal an seinem Ausgang einem Regler 111 zuführt. Der Regler 111 gibt für das nachfolgende Stellglied ein Stromsignal i_daq_ges ab, welches durch die Differenzierung und Kombination bearbeitet ist.

Figur 12 unterscheidet sich von Figur 11 im Wesentlichen dadurch, dass die beiden Eingangsignale in Differenzierern 112 getrennt differenziert und in Filtern 113 getrennt gefiltert werden und auch in Reglern 111 getrennt geregelt werden. Über einen Kombinierer 114 werden die Signale einer Halteabklingfunktion 115 zugeführt. Die Halteabklingfunktion 115 sorgt dafür, dass das Ausgangssignal nicht zu früh endet und so der Trägheit der zu regelnden Körper des Fahrzeugs gegenüber dem anfordernden Signal Rechnung trägt. Die Halteabklingfunktion 115 kann auch nach dem Korrigierer 106 angeordnet sein. Weiterhin wird entsprechend den Figuren 9 und 10 (Korrigierer 106) noch eine Korrektur des Ausgangssignals der Halteabklingfunktion 115 vorgenommen.

In Figur 13 werden die aus Figur 8 entnehmbaren Signale aq_vorh und aq einer Auswerteeinheit 120 zugeführt, die die beiden Eingangsignale zu einem Zustandsignal x_quer ausformt, welches den Zustand der Querbeschleunigung des Fahrzeugs beschreibt und welches in parallelen Reglereinrichtungen des Fahrzeugs Einfluss nehmen kann. Der Filter 121 diente dazu, das einen Vorhalt gegenüber aq besitzende Signal vom Rauschen zu befreien, es gegebenenfalls in der Phase zu ändern und es aus dem oben geschilderten Gründen in seiner Größe zu begrenzen. Hinsichtlich der Auswerteeinheit 120 ist dafür Sorge zu tragen, dass die beiden Eingangsignale angemessen bewertet und gewichtet werden.

In Figur 14 werden das Beschleunigungssignal aq, das abgeleitete Beschleunigungssignal daq (Querruck) und ein ESP-Signal in drei getrennten Steuerungen 116 bearbeitet, als entsprechende Strom-Ausgangssignale von den Steuerungen 116 ausgegeben und anschließend in einem Kombinierer 117 zu einem Ausgangssignal i_quer verarbeitet, wobei der Kombinierer 117 seine Eingangsignale in geeigneter Weise gewichten und bewerten muss. Das Ausgangssignal des Kombinierers 117 kann als Steuersignal für einen nachgeschalteten Aktor dienen.

In Figur 15 ist das Eingangsignal VAufbau_ges eines parallel zur Regelung der Querbeschleunigung arbeitenden Vertikalreglers 119 dargestellt, wobei dieses Eingangssignal durch ein die Querbeschleunigung des Fahrzeugs beschreibendes Zustandssignal x_querdyn über einen Korrigierer 118 zu einem korrigierten Eingangssignal V*Aufbau_ges korrigiert werden kann. Das korrigierende Signal x_querdyn kann beispielsweise durch das Signal x_quer gemäß Figur 13 oder ein anderes geeignetes Signal gebildet sein.

Die Erfindung betrifft also ein Verfahren oder eine Regelungssystemkomponente zur Steuerung von Aktoren vorzugsweise Fahrzeugstoßdämpfern, wobei querdynamische Zustandsgrößen, wie der Querbeschleunigungszustand und der Querruckzustand, als Steuerungseingangsgrößen Verwendung finden.

### Bezugszeichenliste

- 10: Kraftfahrzeug
- 12: Rad
- 14: Rad
- 16: Rad
- 18: Rad
- 20: Aufbau
- 22: Dämpfer
- 24: Dämpfer
- 26: Dämpfer
- 28: Dämpfer
- 30: Wegsensor
- 32: Wegsensor
- 34: Wegsensor
- 36: Wegsensor
- 38: Beschleunigungssensoren
- 40: Beschleunigungssensoren
- 42: Beschleunigungssensoren
- 44: Steuergerät
- 46: Schaltmittel
- 48: Feder
- 50: Feder
- 52: Feder
- 54: Feder
- 56: Schwerpunkt
- 58: Hub
- 60: Signaleingangsmodul
- 61: Nicken
- 62: Hilfsfunktionsmodul
- 63: Wanken
- 64: Reglermodul
- 66: Signalausgangsmodul
- 68: Signalausgangsmodul
- 70: Man-Machine-Interfacemodul
- 72: Filtermodul
- 74: Beladungserkennungsmodul
- 76: Straßenerkennungsmodul
- 78: Endlagendämpfungsmoduls
- 80: Querdynamikmodul
- 82: Längsdynamikmodul
- 84: Vertikaldynamikmodul
- 86: Stromberechnungsmodul
- 90: Strecke
- 92: Regler
- 94: Vergleicher
- 96: Stellglied
- 98: Messglied
- 100: Beobachter
- 101: Begrenzer
- 102: Filter
- 103: Korrigierer
- 104: Kombinierer
- 105: Regler
- 106: Korrigierer
- 107: Regler
- 108: Kombinierer
- 109: Differenzierer
- 110: Filter
- 111: Regler
- 112: Differenzierer
- 113: Filter
- 114: Kombinierer
- 115: Halteabklingfunktion
- 116: Steuerungen
- 117: Kombinierer
- 118: Korrigierer
- 119: Vertikalreglers
- 120: Auswerteeinheit
- 121: Filter

## Patentansprüche

1. Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden und der Dämpferregler wenigstens ein Steuersignal zur Ansteuerung von Aktuatoren liefert, mittels denen die Bewegung des Fahrzeugaufbaus beeinflusst werden kann, **dadurch gekennzeichnet, dass** mittels des Dämpferreglers aus den Sensorsignalen unter Berücksichtigung von momentanen und erwarteten querdynamischen Zustandsgrößen das wenigstens eine Steuersignal zur Ansteuerung der Aktuatoren ermittelt wird, wobei mindestens eine Eingangsgröße (aq_mess) verwendet wird, die auf einer oder mehreren querdynamischen Messgrößen, basiert und mindestens eine weitere Eingangsgröße (aq_vorh) verwendet wird, die ein oder mehrere querdynamische Signale mit Vorhalt, gegenüber den Messsignalen, aufweist.

2. Verfahren nach Anspruch 1, **dadurch gekennzeichnet, dass** die Größe mit Vorhalt (aq_vorh) auf einem Beobachtermodell basiert, insbesondere einem Einspurmodell.

3. Verfahren nach einem der vorhergehenden Ansprüche, **dadurch gekennzeichnet, dass** weitere Eingangsgrößen Verwendung finden, die einen querdynamischen Bezug aufweisen, insbesondere eine ESP-Anforderung oder andere Anforderungen aus Fahrerassistenzsystemen.

4. Verfahren nach einem der vorhergehenden Ansprüche, **dadurch gekennzeichnet, dass** mehrere oder alle Eingangsgrößen miteinander kombiniert (104, 108, 114, 117) werden und zu einem oder mehreren Querbeschleunigungszuständen (i_daq_ges, i_quer, i_aq_ges*) zusammengefasst werden.

5. Verfahren nach Anspruch 5, **dadurch gekennzeichnet, dass** unterschiedliche Zustandsausprägungen existieren für stärker unkritische sportlich dynamische (normale Kurvenfahrt) und stärker fahrsicherheitsbetonte Zustände (ESP-Eingriff).

6. Verfahren nach einem der vorhergehenden Ansprüche, **dadurch gekennzeichnet, dass** die Kombinationseinheit (104, 108, 114, 117) oder eine andere vor- oder nachgeschaltete Einheit eine Wichtung und/oder Filterung der Eingangsgrößen ermöglicht.

7. Verfahren nach einem der vorhergehenden Ansprüche, **dadurch gekennzeichnet, dass** aus den Querbeschleunigungsgrößen (aq, aq_vorh) über Differenzierung (109, 112) beziehungsweise Differenzierung (109, 112) und Filterung (110, 113) eine beziehungsweise mehrere Querruckgrößen (i_daq_ges) erzeugt werden.

8. Verfahren nach einem der vorhergehenden Ansprüche, **dadurch gekennzeichnet, dass** die Querruckgrößen (i_daq_ges) in einer oder mehreren Einheiten (114) ähnlich zur Querbeschleunigung umgerechnet, gewichtet, gefiltert (113) und/oder kombiniert werden.

9. Verfahren nach einem der vorhergehenden Ansprüche, **dadurch gekennzeichnet, dass** die Querbeschleunigungsgrößen (aq_vorh, aq), die Querruckgrößen und/oder die querdynamischen Zustandsgrößen über weitere Eingangsgrößen (Fahr, Bel, Str, Akt) modifiziert werden, wie Fahrzustand (Längsdynamik), Beladungszustand, Straßenzustand, Fahreraktivität (Bremse, Lenkung, Moduswahl) und dergleichen.

10. Verfahren nach einem der vorhergehenden Ansprüche, **dadurch gekennzeichnet, dass** als Steuerungsausgangsgröße(n) (i_aq*, i_aq_ges*) eine der Aktorstellgröße proportionale Größe wie beispielweise der Strom resultiert.

11. Verfahren nach einem der vorhergehenden Ansprüche, **dadurch gekennzeichnet, dass** die existierenden Querbeschleunigungszustände (aq_vorh*, aq*) und/oder die existierenden Querruckzustände (daq) und/oder die fahrsicherheitsbetonten Zustände (ESP-Bit) in parallel angeordneten Steuerungen (116) Eingang finden.

12. Verfahren nach Anspruch 11, **dadurch gekennzeichnet, dass** eine nachgeschaltete Kombinationseinheit (117) mehrere oder alle Ausgangsgrößen der Steuerungen (116) miteinander kombiniert.

13. Verfahren nach Anspruch 12, **dadurch gekennzeichnet, dass** die Kombination abhängig vom Zustand Komfort/Sport (beziehungsweise Fahrsicherheit oder geringe Radlastschwankung) erfolgt.

14. System zur Beeinflussung der Bewegung eines in seinen Bewegungsabläufen steuerbaren oder regelbaren Fahrzeugaufbaus eines Kraftfahrzeuges, mit Sensoren, welche die Bewegung des Fahrzeugaufbaus erfassen, mit steuerbaren oder regelbaren Aktuatoren, insbesondere semi-aktiven oder aktiven Dämpfern, die zwischen dem Fahrzeugaufbau und den Fahrzeugrädern angeordnet sind, mit einem Dämpferregler, mittels dem die Sensorsignale verarbeitet werden und wenigstens ein Ansteuersignal für die Aktuatoren bereitgestellt wird, **dadurch gekennzeichnet, dass** der Dämpferregler Regelungsmodule umfasst, mittels denen aus den Sensorsignalen unter Berücksichtigung von momentanen und erwarteten querdynamische Zustandsgrößen, wenigstens ein Steuersignal für die Aktuatoren generierbar ist.

## Claims

1. Method for generating signals for influencing the movement of a vehicle body, which can be open-loop or closed-loop controlled in its movement sequences, of a motor vehicle, wherein the movement of the vehicle body is determined by sensors, the sensor signals which correspond to the determined sensor values are fed to a damper regulator, and the damper regulator supplies at least one control signal for actuating the actuators by means of which the movement of the vehicle body can be influenced, **characterized in that** the at least one control signal for actuating the actuators is determined from the sensor signals by means of the damper regulator taking into account instantaneous and expected lateral-dynamic state variables, wherein at least one input variable (aq_mess) is used, which is based on one or more lateral-dynamic measurement variables, and at least one further input variable (aq_vorh) is used which has one or more lateral-dynamic signals with a lead with respect to the measuring signals.

2. Method according to Claim 1, **characterized in that** the variable with a lead (aq vorh) is based on an observer model, in particular a single-track model.

3. Method according to one of the preceding claims, **characterized in that** further input variables are used which relate to lateral dynamics, in particular an ESP request or other requests from driver assistance systems.

4. Method according to one of the preceding claims, **characterized in that** a plurality of, or all of, the input variables are combined with one another (104, 108, 114, 117) and combined to form one or more lateral acceleration states (i_daq_ges, i_quer, i_aq_ges*).

5. Method according to Claim 5, **characterized in that** different state characteristics exist for more markedly non-critical sporty dynamic states (normal cornering) and more markedly driving-safety-oriented states (ESP intervention).

6. Method according to one of the preceding claims, **characterized in that** the combination unit (104, 108, 114, 117) or another unit which is connected upstream or downstream permits weighting and/or filtering of the input variables.

7. Method according to one of the preceding claims, **characterized in that** one or more lateral jolt variables (i_daq_ges) is/are generated from the lateral acceleration variables (aq, aq_vorh) by means of differentiation (109, 112) or differentiation (109, 112) and filtering (110, 113).

8. Method according to one of the preceding claims, **characterized in that** the lateral jolt variables (i_daq_ges) are converted, weighted, filtered (113) and/or combined in one or more units (114) similarly to the lateral acceleration.

9. Method according to one of the preceding claims, **characterized in that** the lateral acceleration variables (aq_vorh, aq), the lateral jolt variables and/or the lateral-dynamic state variables are modified by means of further input variables (drive, load, road, act) such as the driving state (longitudinal dynamics), load state, road state, driver activity (brake, steering, mode selection) and the like.

10. Method according to one of the preceding claims, **characterized in that** a variable such as, for example, the current which is proportional to the actuator manipulated variable results as a control output variable or variables (i_aq*, i_aq_ges*).

11. Method according to one of the preceding claims, **characterized in that** the existing lateral acceleration states (aq_vorh*, aq*) and/or the existing lateral jolt states (daq) and/or the driving-safety-oriented states (ESP bit) are input into controllers (116) which are arranged in parallel.

12. Method according to Claim 11, **characterized in that** a combination unit (117) which is connected downstream combines a plurality of, or all of, the output variables of the controllers (116) with one another.

13. Method according to Claim 12, **characterized in that** the combination is made as a function of the comfort/sporty state (or driving safety or low wheel load fluctuation).

14. System for influencing the movement of a vehicle body, which can be open-loop or closed-loop controlled in its movement sequences, of a motor vehicle, having sensors which sense the movement of the vehicle body, having open-loop or closed-loop controllable actuators, in particular semiactive or active dampers which are arranged between the vehicle body and the vehicle wheels, having a damper regulator by means of which the sensor signals are processed and at least one actuation signal for the actuators is made available, **characterized in that** the damper regulator comprises regulating modules by means of which at least one control signal for the actuators can be generated from the control signals taking into account instantaneous and expected lateral-dynamic state variables.

## Revendications

1. Procédé destiné à générer des signaux pour agir sur le mouvement d'une structure de véhicule d'un véhicule automobile, pouvant être commandée ou régulée dans ses processus de mouvement, dans lequel le mouvement de la structure de véhicule est détecté à l'aide de capteurs, les signaux de capteurs correspondant aux valeurs de capteurs déterminées sont acheminés vers un régulateur d'amortisseurs, et le régulateur d'amortisseurs délivre au moins un signal de commande pour la commande d'actionneurs, au moyen desquels le mouvement de la structure de véhicule peut être influencé, **caractérisé en ce que** l'au moins un signal de commande est déterminé pour la commande des actionneurs au moyen du régulateur d'amortisseurs à partir des signaux de capteurs en tenant compte de grandeurs d'état dynamiques transversales instantanées et attendues, dans lequel au moins une grandeur d'entrée (aq_mess) est utilisée, celle-ci ayant pour base une ou plusieurs grandeurs de mesure dynamiques transversales, et au moins une autre grandeur d'entrée (aq_vorh) est utilisée, celle-ci présentant un ou plusieurs signaux dynamiques transversaux avec dérivée par rapport aux signaux de mesure.

2. Procédé selon la revendication 1, **caractérisé en ce que** la grandeur avec dérivée (aq_vorh) a pour base un modèle d'observateur, notamment un modèle à une voie.

3. Procédé selon l'une quelconque des revendications précédentes, **caractérisé en ce que** d'autres grandeurs d'entrée peuvent être utilisées, celles-ci présentant une référence dynamique transversale, notamment une demande ESP ou d'autres demandes provenant du système d'aide à la conduite.

4. Procédé selon l'une quelconque des revendications précédentes, **caractérisé en ce que** plusieurs ou la totalité des grandeurs d'entrée sont combinées les unes aux autres (104, 108, 114, 117) et sont synthétisées en un ou plusieurs états d'accélération transversale (i_daq_ges, i_quer, i_aq_ges*).

5. Procédé selon la revendication 4, **caractérisé en ce qu'**il existe différentes expressions d'états pour des états fortement dynamiques et non critiques d'un point de vue sportif (conduite normale dans les virages) et plus fortement accentués pour la sécurité de conduite (engagement de l'ESP).

6. Procédé selon l'une quelconque des revendications précédentes, **caractérisé en ce que** l'unité de combinaison (104, 108, 114, 117) ou une autre unité disposée en amont ou en aval permet une pondération et/ou un filtrage des grandeurs d'entrée.

7. Procédé selon l'une quelconque des revendications précédentes, **caractérisé en ce qu'**une ou plusieurs grandeurs d'excursion transversale (i_daq_ges) sont générées à partir des grandeurs d'accélération transversale (aq, aq_vorh) par différentiation (109, 112) ou différentiation (109, 112) et filtrage (110, 113).

8. Procédé selon l'une quelconque des revendications précédentes, **caractérisé en ce que** les grandeurs d'excursion transversale (i_daq_ges) sont converties, pondérées, filtrées (113) et/ou combinées dans une ou plusieurs unités (114) d'une manière semblable à l'accélération transversale.

9. Procédé selon l'une quelconque des revendications précédentes, **caractérisé en ce que** les grandeurs d'accélération transversale (aq_vorh, aq), les grandeurs d'excursion transversale et/ou les grandeurs d'état dynamiques transversales sont modifiées par l'intermédiaire d'autres grandeurs d'entrée (Fahr, Bel, Str, Akt), telles que l'état de conduite (dynamique longitudinale), l'état de charge, l'état de la route, l'activité du conducteur (freinage, braquage, sélection de mode) ou autres.

10. Procédé selon l'une quelconque des revendications précédentes, **caractérisé en ce qu'**une grandeur de réglage d'actionneur proportionnelle à des grandeurs telles que le courant, est obtenue en tant que grandeur(s) de sortie de commande (i_aq*, i_aq_ges*).

11. Procédé selon l'une quelconque des revendications précédentes, **caractérisé en ce que** les états d'accélération transversale existants (aq_vorh*, aq*) et/ou les états d'excursion transversale existants (daq) et/ou les états d'accentuation de la sécurité de conduite (ESP-Bit) sont fournis en entrée à des systèmes de commande (116) disposés en parallèle.

12. Procédé selon la revendication 11, **caractérisé en ce qu'**une unité de combinaison disposée en aval (117) combine les unes aux autres plusieurs ou la totalité des grandeurs de sortie des systèmes de commande (116).

13. Procédé selon la revendication 12, **caractérisé en ce que** la combinaison est effectuée en fonction d'un état de confort/sportif (ou de la sécurité de conduite ou d'une faible fluctuation de la charge des roues).

14. Système destiné à agir sur le mouvement d'une structure de véhicule d'un véhicule automobile pouvant être commandée ou régulée dans ses processus de mouvement, comportant des capteurs qui détectent le mouvement de la structure de véhicule, comportant des actionneurs pouvant être commandés ou régulés, notamment des amortisseurs semi-actifs ou actifs qui sont disposés entre la structure de véhicule et des roues de véhicule, comportant un régulateur d'amortisseurs au moyen duquel les signaux de capteurs sont traités et au moins un signal de commande destiné aux actionneurs est délivré, **caractérisé en ce que** le régulateur d'amortisseurs comprend des modules de régulation au moyen desquels au moins un signal de commande destiné aux actionneurs peut être généré à partir des signaux de capteurs en tenant compte de grandeurs d'état dynamiques transversales instantanées et attendues.
